# EUROPEAN PATENT APPLICATION

(11) **EP 1 708 484 A2**
(43) Date of publication of application: **04.10.2006**
(21) Application number: 05255048.0
(22) Date of filing: 16.08.2005
(51) Int. Cl.: H04N 5/00, H04N 7/16

(54) **Encryption system, encryption device and decryption device**

(30) Priority: 30.03.2005 JP 2005096841
(71) Applicant: FUJITSU LIMITED, Kawasaki-shi, Kanagawa 211-8588 (JP)
(72) Inventor: Takahashi, Tetsu, Fujitsu Limited, Kawasaki-shi Kanagawa 211-8588 (JP)
(74) Representative: Stebbing, Timothy Charles

(57) **Abstract**

An encryption system (1) for securely protecting digital video data or digital audio data from illegal copying. This system has an encryption device (10) and a decryption device (20). The encryption device includes: an A/D converter (2); a code setting unit (3) for separately generating a frame check code on first data of each of a plurality of frame data created by collecting unit data into chains; an encrypting unit (4) for creating chain encrypted data for each chain by sequentially performing an encryption processing, on the basis of the frame check code, using encryption results of previous unit data for encryption of next unit data; and an interface (5). The decryption device (20) includes an interface (6), a transfer starting unit (7)and a decrypting unit (8) for decrypting the encrypted data.

## Description

The present invention relates to an encryption system, an encryption device and a decryption device. More particularly, the present invention relates to an encryption system and an encryption device for subjecting time series data to sequential encryption processing by predetermined unit data to create encrypted data and sequentially transferring the encrypted data. The invention also pertains to a decryption device for sequentially performing decryption of time series data encrypted by predetermined unit data.

Conventionally, there is known a system for transferring still image signals, video signals or analog audio (voice) signals after conversion into digital data and allowing the digital data to be displayed on a monitor or to be reproduced from a speaker at a transfer destination (see, e.g., Japanese Unexamined Patent Publication No. 2001-339732).

This system comprises a computer having, for example, a capture board, a video card and an audio card.

This computer has the following three functions of (1) to (3):
(1) a function of compressing inputted AV (Audio Video) analog signals by the capture board, transferring the compressed AV data to a main memory of the computer via a bus such as a PCI (Peripheral Components Interconnect)/USB (Universal Serial Bus), and further transferring the data to a storage device such as an HDD for storage;
(2) a function of transferring uncompressed digital video data from the capture board to the main memory of the computer via the bus such as the PCI/USB, and further transferring the data to the video card within the computer in real time to display the data on a display; and
(3) a function of transferring uncompressed digital audio data from the capture board to the main memory of the computer via the bus such as the PCI/USB, and further transferring the data to the audio card within the computer in real time to output the data from a speaker.

In addition, the computer can perform one of the above-described functions (1) to (3) or can perform a plurality thereof at the same time.

In the case of the function (1), the AV data is compressed and a content protection signal is added thereto. However, in the cases of the functions (2) and (3), uncompressed digital video data or digital audio data with no protection flows via the bus of the PCI/USB and therefore, the following problem arises. That is, during transfer of the digital video data or the digital audio data, the data is vulnerable to illegal copying.

In view of the foregoing, it is desirable to provide an encryption system capable of surely protecting digital video data or digital audio data from illegal copying, and also to provide an encryption device and a decryption device which are used in the system.

According to one aspect of the present invention, there is provided an,encryption system for subjecting time series data to sequential encryption processing to create encrypted data and sequentially transferring the encrypted data. This system includes an encryption device and a decryption device. The encryption device has a code setting unit, an encrypting unit and a transferring unit. The code setting unit separately sets a frame check code on first data of each of a plurality of frame data created by collecting unit data by a predetermined number into chains. The encrypting unit creates chain encrypted data for each chain by sequentially performing an encryption processing, on the basis of the frame check code, using encryption results of previous unit data for encryption of next unit data. The transferring unit transfers each of the created chain encrypted data. The decryption device has a receiving unit and a decrypting unit. The receiving unit receives the chain encrypted data for each chain transferred by the transferring unit. The decrypting unit creates decrypted data by sequentially subjecting the chain encrypted data received by the receiving unit to a decryption processing using decryption results of previous unit data for decryption of next unit data.

According to another aspect of the present invention, there is provided an encryption device for subjecting time series data to sequential encryption processing to create encrypted data and sequentially transferring the encrypted data. This device has a code setting unit and an encrypting unit. The code setting unit separately sets a frame check code on first data of each of a plurality of frame data created by collecting unit data into chains. The encrypting unit creates chain encrypted data for each chain by sequentially performing an encryption processing, on the basis of the frame check code, using encryption results of previous unit data for encryption of next unit data.

According to still another aspect of the present invention, there is provide a decryption device for sequentially performing decryption of time series data. This device has a receiving unit and a decrypting unit. The receiving unit receives chain encrypted data. The chain encrypted data is created by separately setting a frame check code on first data of each of a plurality of frame data created by collecting the unit data into chains and by sequentially performing an encryption processing for each chain, on the basis of the frame check code, using encryption results of previous unit data for encryption of next unit data. The decrypting unit creates decrypted data. The decrypted data is created by sequentially subjecting the chain encrypted data received by the receiving unit to a decryption processing using decryption results of previous unit data for decryption of next unit data.

The above and other features and advantages of the present invention will become apparent from the following description when taken in conjunction with the accompanying drawings which illustrate preferred embodiments of the present invention by way of example, in which:
FIG. 1 is a principle view showing an outline of an encryption system according to an embodiment.
FIG. 2 shows a hardware configuration of the encryption system shown in FIG. 1.
FIG. 3 shows a VRAW signal displayed on a monitor according to the embodiment.
FIG. 4 shows details of frame data.
FIG. 5 shows a register mapped in BAR0 space and BAR1 space within a PCI interface.
FIG. 6 is a flow chart showing a control flow in data processing.
FIG. 7 shows encryption processing in a computer system.
FIG. 8 shows decryption processing in a computer system.
FIG. 9 shows an alternative embodiment of encryption processing.
FIG. 10 shows an alternative embodiment of decryption processing.

The principles of the present invention will be described in detail below with reference to the accompanying drawings, which show embodiments of the invention.

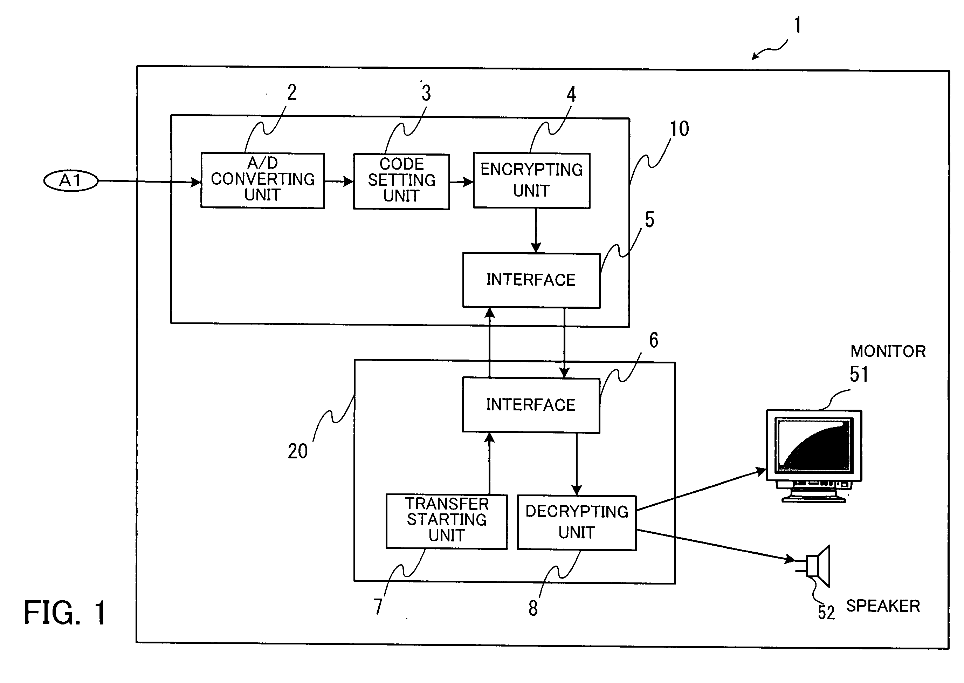

FIG. 1 is a principle view showing an outline of an encryption system according to an embodiment.

The encryption system 1 shown in FIG. 1 is a system for sequentially performing transfer of time series data such as video data or voice data where data occur in time series. The system 1 includes an encryption device 10, a decryption device 20, a monitor 51 and a speaker 52. The device 10 has an A/D converter 2, a code setting unit 3, an encrypting unit 4 and an interface 5. The device 20 has an interface 6, a transfer starting unit 7 and a decrypting unit 8.

The A/D converter 2 converts inputted analog data A1 such as still images, videos or voices to stream data (digital data).

The code setting unit 3 creates a plurality of frame data by collecting unit data of the stream data by (in) a predetermined number and separately generates a frame check code on first (unit) data of each of the frame data. The unit data is described in detail later.

The encrypting unit 4 creates chain encrypted data by sequentially performing an encryption processing, on the basis of the frame check code, using encryption results of previous unit data for encryption of next unit data.

The interface 5 transmits and receives various types of data such as the above-described encrypted data to and from the interface 6.

The transfer starting unit 7 instructs the encrypting unit 4 to perform encryption. On the basis of the instruction, the unit 4 performs the encryption.

The decrypting unit 8 subjects each of the data encrypted by the encrypting unit 4 to a decryption processing to create each of the decrypted unit data.

Further, when the decrypted unit data is image data, the unit 8 allows the monitor 51 to display the data on its screen in units of frame data. Further, when the decrypted unit data is voice data, the unit 8 allows the speaker 52 to output the data in units of frame data.

According to this encryption system 1, the encryption is performed using the frame data. Therefore, when the frame data and encryption key of a frame are obtained, encrypted data capable of decryption can be easily created.

Next, preferred embodiments of the present invention will be described in detail with reference to the accompanying drawings, wherein like reference numerals refer to like elements throughout.

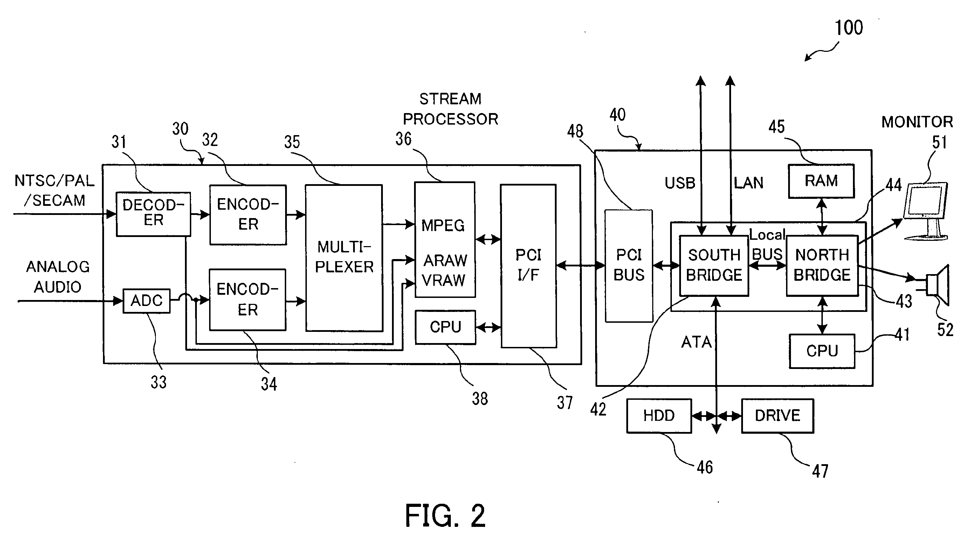

FIG. 2 shows a hardware configuration of the data-processing system shown in FIG. 1.

The computer system 100 shown in FIG. 2 includes a capture board 30, a mother board 40, an HDD 46, a drive 47, a monitor 51 and a speaker 52. Further, the capture board 30 has a decoder 31, an encoder 32, an ADC (AD converter) 33, an encoder 34, a multiplexer 35, a stream processor 36, a PCI interface 37 and a CPU (Central Processing Unit) 38. The mother board 40 has a CPU 41, a chip set 44 composed of a south bridge 42 and a north bridge 43, a RAM 45 and a PCI bus 48.

First, the capture board 30 will be described.

The decoder 31 converts an inputted analog video signal of the NTSC (National Television System Committee), PAL (Phase Alternating Line) or SECAM (Sequential Couleur Avec Memoire) system to a video stream signal as a digital signal. Then, the decoder 31 outputs the video stream signal to the encoder 32 and the stream processor 36.

The encoder 32 fetches the video stream signal from the decoder 31. The encoder 32 compression-encodes the video stream signal by a predetermined method such as an MPEG2 VIDEO MP@ML method to generate a compressed video signal. Then, the encoder 32 outputs the compressed video signal to the multiplexer 35.

The ADC 33 converts an inputted analog Audio signal to an audio stream signal. Then, the ADC 33 outputs the audio stream signal to the encoder 34 and the stream processor 36.

The encoder 34 fetches the audio stream signal from the ADC 33. The encoder 34 compression-encodes the audio stream signal by a predetermined method such as an MPEG1 Audio LayerII(2) method to generate a compressed audio signal. Then, the encoder 34 outputs the compressed audio signal to the multiplexer 35.

The multiplexer 35 multiplexes, by a predetermined format such as an MPEG2PS format, the compressed video signal inputted from the encoder 32 and the compressed audio signal inputted from the encoder 34 to generate a system stream signal. Then, the multiplexer 35 outputs the system stream signal to the stream processor 36.

The stream processor 36 fetches an uncompressed video stream signal (hereinafter referred to as a "VRAW signal") from the decoder 31, an uncompressed audio stream signal (hereinafter referred to as an "ARAW signal") from the ADC 33 and the system stream signal (hereinafter referred to as an "MPEG signal") from the multiplexer 35. Then, the processor 36 transfers the VRAW signal, the ARAW signal and the MPEG signal to a DMA register of the PCI interface 37. In addition, the stream processor 36 may transfer these stream signals collectively or individually.

The PCI interface 37 executes master transfer of the VRAW signal, the ARAW signal and the MPEG signal to the RAM 45 via the PCI bus 48 using the above-described DMA register.

The CPU 38 controls operations of each unit of the capture board 30.

Next, the mother board 40 will be described.

The CPU 41 controls operations of each unit of the mother board 40. To the CPU 41, the RAM (Random Access Memory) 45, the HDD (Hard Disk Drive) 46, the drive 47 and the PCI bus 48 are electrically connected via the chip set 44.

Further, the CPU 41 allows the stream processor 36 to start the transfer of the above-described VRAW signal, ARAW signal and MPEG signal.

The chip set 44 controls fundamental portions of the mother board 40, such as Interrupt Request (IRQ), DMA, system clock, timer or power management.

The south bridge 42 controls the HDD 46, the drive 47, I/O devices such as USB and LAN, and the PCI bus 48.

The north bridge 43 controls the RAM 45 or external cache memory chips (not shown) to govern data transfer to and from the CPU 41 or the I/O devices.

In addition, the north bridge 43 has a graphics processing function and an audio reproduction function. To the north bridge 43, the monitor 51 and the speaker 52 are connected. Further, the north bridge 43 causes the monitor 51 to display images on its screen or causes the speaker 52 to output voices in compliance with an instruction from the CPU 41.

Incidentally, the south bridge 42 and the north bridge 43 are electrically connected through a Local Bus.

The RAM 45 temporarily stores at least part of an OS (Operating System) program or application program executed by the CPU 41. Furthermore, the RAM 45 stores various pieces of data necessary for processings by the CPU 41. The HDD 46 stores OS programs or application programs.

The drive 47 constitutes, for example, a recording unit that allows computer-readable recording media to record data. The computer-readable recording media include a magnetic carrier, an optical disk, a magneto-optical recording medium and a semiconductor memory. The magnetic carrier includes a flexible disk (FD) and a magnetic tape, in addition to an HDD. The optical disk includes a DVD (Digital Versatile Disc), a DVD-RAM, a CD-ROM (Compact Disc Read Only Memory) and a CD-R (Recordable)/RW (ReWritable). The magneto-optical recording medium includes a MO (Magneto-Optical disk).

The PCI bus 48 is electrically connected to the PCI interface 37. The PCI bus 48 transmits and receives data to and from the PCI interface 37.

Next, operations (actions) of the computer system according to the present embodiment will be described.

The analog video signal inputted to the capture board 30 is converted to a video stream signal by the decoder 31. The video stream signal is outputted to the encoder 32 and simultaneously outputted as a VRAW signal to the stream processor 36. The video stream signal outputted to the encoder 32 is compression-encoded to a compressed digital video signal. Then, the signal is outputted to the multiplexer 35.

On the other hand, the analog audio signal inputted to the capture board 30 is converted to an audio stream signal by the ADC 33. The audio stream signal is outputted to the encoder 34 and simultaneously outputted as an ARAW signal to the stream processor 36.

The audio stream signal outputted to the encoder 34 is compression-encoded to a compressed digital audio signal. Then, the signal is outputted to the multiplexer 35.

The compressed digital video signal and the compressed digital audio signal which are outputted to the multiplexer 35 are multiplexed to a multiplexed signal. Then, the multiplexed signal is outputted to the stream processor 36 as a system stream signal.

Among the MPEG signal, the ARAW signal and the VRAW signal transferred to the stream processor 36, a signal whose transfer is permitted by the CPU 41 is subjected to an encryption processing to serve as encrypted data. Then, the data is transferred to the DMA register of the PCI interface 37. The encrypted data transferred to the DMA register of the PCI interface 37 is transferred by means of Master transfer to the RAM 45 of the mother board 40 using the DMA register.

The encrypted data transferred to the RAM 45 by means of Master transfer is decrypted by the CPU. Then, the decrypted data is stored in another address space within the RAM 45. The decrypted data are read out by the north bridge 43. When the decrypted data is image data, the image is displayed on the monitor 51. On the other hand, when the decrypted data is voice (sound) data, the sounds are outputted from the speaker 52.

Further, the encryption processing and the decryption processing will be described in detail later.

Next, each type of data used in the encryption processing will be described.

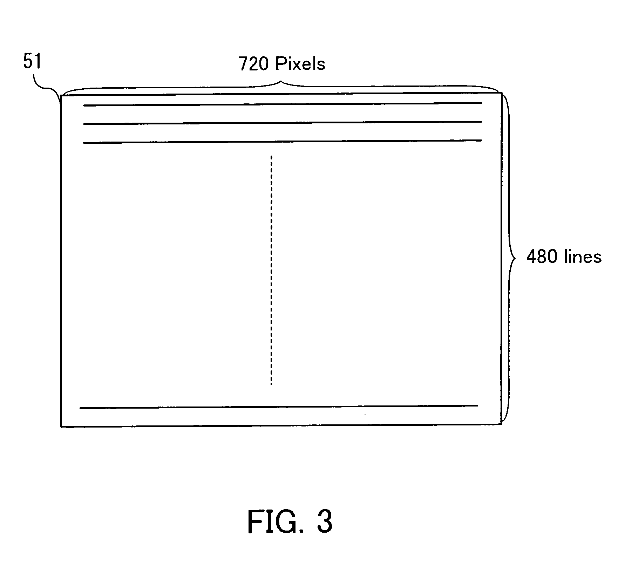

FIG. 3 shows a VRAW signal displayed on the monitor according to the present embodiment.

The monitor 51 according to the present embodiment is a monitor featuring the NTSC system. The monitor 51 can display data corresponding to 720 pixels wide x 480 lines long.

In the present embodiment, the data constituting screen images which are displayed on one screen within a predetermined time, namely, frame-based data constituting a video frame is referred to as "frame data".

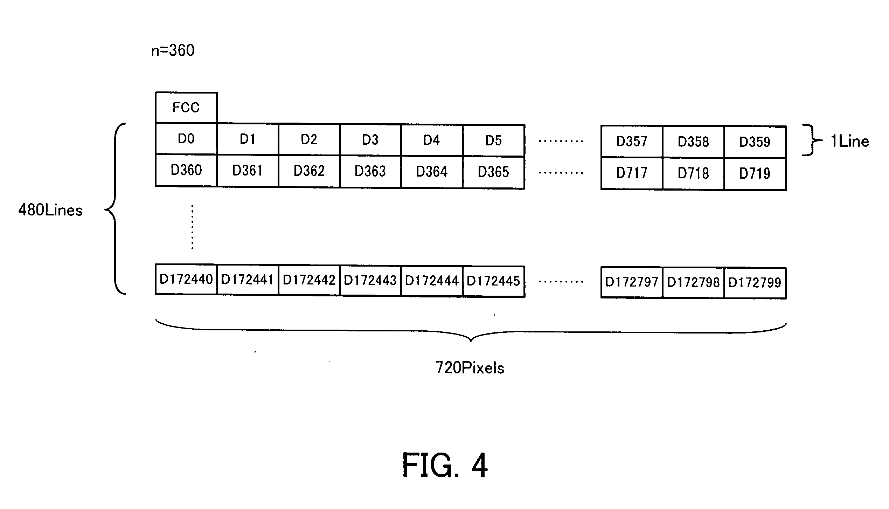

FIG. 4 shows details of the frame data.

In the present embodiment, a data format referred to as 4:2:2 is used for the line. The ratio 4:2:2 expresses a sampling frequency ratio among a luminance signal Y and two color-difference signals Cb and Cr. A data length per pixel is composed of 2-byte data.

Further, in the present embodiment, 4-byte data containing data corresponding to 2 pixels is herein referred to as "unit data". In the present embodiment, encryption of the VRAW signal is performed using the unit data.

Therefore, the number of unit data corresponding to one line (corresponding to one scanning line) is 720 (pixels) x 2 (bytes)/ 4 (bytes) = 360 (pieces).

To the first (unit) data of the frame data, the frame check code (FCC) with 4-byte data length is added.

The frame check code has a unique code which is not found in the VRAW signal. Therefore, this code is sharply distinguished from the VRAW signal.

Further, the frame data is partitioned into portions each comprising n pieces of unit data.

Each such portion is hereinafter referred to as a "chain". An encrypted chain is referred to as 'chain encrypted data'.

Further, the number of unit data which are included in one chain is expressed as a "chain length (n)".

In the present embodiment, the chain length n is set to 360 (i.e. is equal to one line). Therefore, the unit data D0, D1, ..., and D359 constitute one chain, the unit data D360, D361, ..., and D719 constitute one chain, and the unit data D172440, D172441, ..., and D172799 constitute one chain.

Next, the DMA register of the PCI interface will be described.

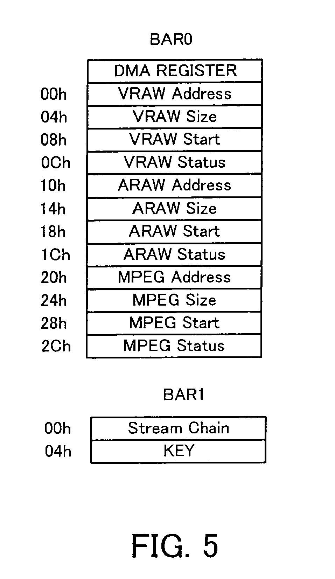

FIG. 5 shows a register mapped in BAR0 space and BAR1 space within the PCI interface.

As shown in FIG. 5, the DMA register mapped in BAR (Base Address Register) 0 space within the PCI interface 37 has an Address register, a Size register, a Start register and a Status register corresponding to each of the VRAW signal, the ARAW signal and the MPEG signal.

The DMA register will be described below. The same register content is set for the VRAW signal, the ARAW signal and the MPEG signal. Therefore, each of the registers corresponding to the VRAW signal is representatively described below.

An address of the VRAW signal, which indicates the first address of PCI side addresses mapped in an address space of the CPU 41, is written in the VRAW Address register.

A transfer size of the VRAW signal is written in the VRAW Size register.

An address indicating a transfer start/end of the VRAW signal is written in the VRAW Start register. In the present embodiment, when an address '00000001h' is written, the transfer of the VRAW signal starts, whereas when an address '00000000h' is written, the transfer thereof ends.

An address asserting/negating a transfer completion interrupt is written in the VRAW Status register. In the present embodiment, when an address '00000001h' is written, the transfer completion interrupt is asserted.

In addition, the chain length (n) is set in the Stream Chain register mapped in the BAR1 space within the PCI interface 37. On the other hand, the encryption key for use in the encryption processing of the unit data is set in the KEY register mapped in the BAR1 space within the PCI interface 37. The data length of the encryption key is set equally to that of the unit data.

Next, data processing in the data-processing system according to the present embodiment will be described.

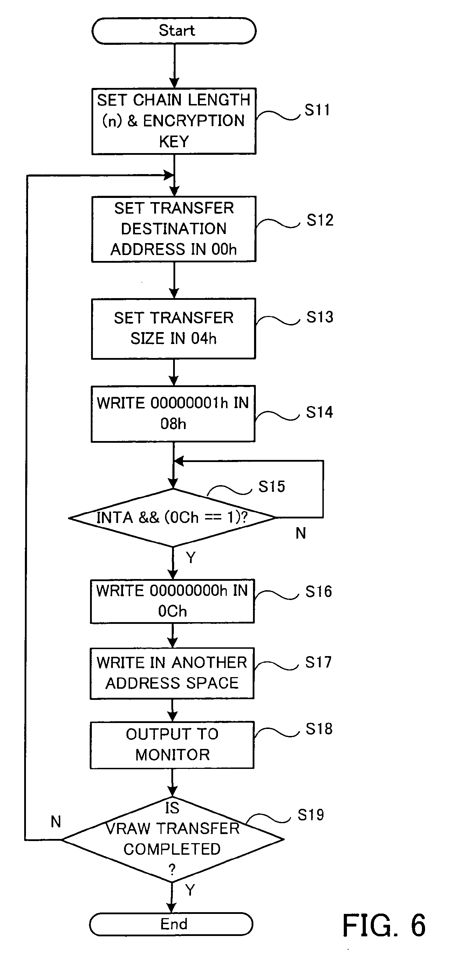

FIG. 6 is a flow chart showing a control flow in the data processing.

The data processing of the VRAW signal is representatively described below.

First, the CPU 41 sets the chain length (n) of the VRAW signal in the Stream Chain register mapped in the BAR1 space and sets the encryption key in the KEY register mapped in the BAR1 space (step S11).

Next, the CPU 41 sets a transfer destination address within the RAM 45 in the VRAW Address register (00h) (step S12).

Next, the CPU 41 sets a transfer size of the VRAW signal in the VRAW Size register (04h) (step S13).

Next, the CPU 41 writes an address '00000001h' in the VRAW Start register (08h) (step S14). As a result, the transfer of the VRAW signal from the stream processor 36 starts. The stream processor 36 sequentially performs the encryption processing on the VRAW signal to obtain encrypted data. At the same time, the processor 36 executes the master transfer of the data corresponding to the transfer size set in the VRAW Size register to an address set in the VRAW Address register, namely, to a transfer destination address within the RAM 45 set in step S12.

Simultaneously with operations of the stream processor 36, the CPU 41 decides whether the transfer completion interrupt (INTA) is asserted or not (step S15), and stands ready until the transfer completion interrupt is asserted (No in step S15).

After transfer completion of the data corresponding to the above size, the stream processor 36 writes the address 00000001h in the VRAW Status register (0Ch) and asserts the transfer completion interrupt (INTA).

As a result, the CPU 41 decides that the transfer completion interrupt is asserted (Yes in step S15). Then, the CPU 41 writes the address '00000000h' in the VRAW Status register (0Ch) and negates the transfer completion interrupt (INTA) (step S16).

Next, the CPU 41 reads out the transferred VRAW signals from the RAM 45 and sequentially performs the decryption processing on the signals to obtain decrypted data. Then, the CPU 41 writes the obtained data in another address space within the RAM 45 (step S17).

Next, the north bridge 43 reads out the decrypted data and outputs the data to the monitor 51 in real time (step S18).

Next, the CPU 41 decides whether the VRAW signal transfer is completed or not (step S19).

When the VRAW signal transfer is not completed (No in step S19), the CPU 41 proceeds to step S12 and successively performs the operation.

On the other hand, when the VRAW signal transfer is completed (Yes in step S19), the CPU 41 completes the transfer operation.

Next, the encryption processing and the decryption processing in the encryption system according to the present embodiment will be described.

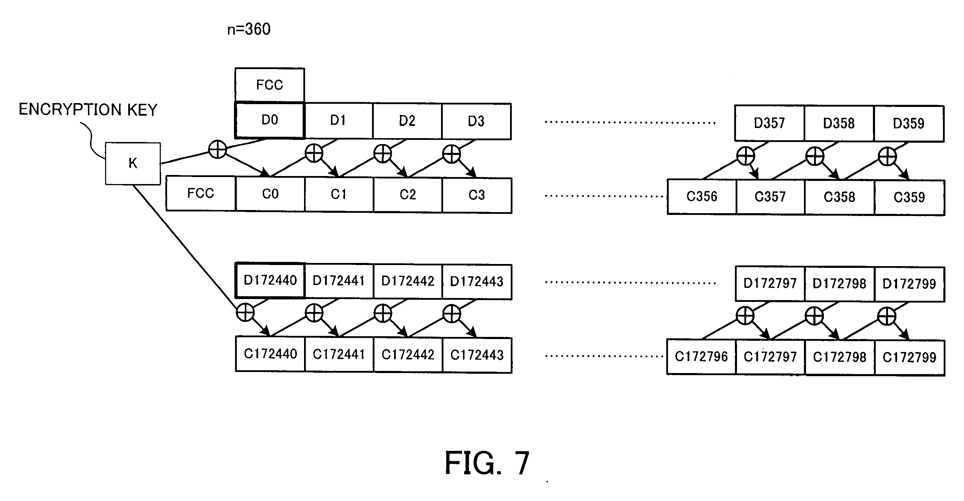

FIG. 7 shows the encryption processing in the computer system.

In the encryption processing, the stream processor 36 performs the following steps. That is, the processor 36 sets a frame check code for each of the frame data (frame). Specifically, the processor 36 adds the frame check code to the head of the frame data. Further, the processor 36 calculates an XOR between unit data D0 following the frame check code, that is, the first unit data and an encryption key K set in the KEY register to create the encrypted data C0. Thereafter, the processor 36 adds the same frame check code as that added to the unit data D0 to the head of the created encrypted data C0. The processor 36 may perform this addition operation of the frame check code during the encryption processing or at the end of the encryption processing.

Next, the processor 36 calculates the XOR between the encrypted data C0 and the next unit data D1 to create the encrypted data C1. After that, the processor 36 sequentially performs the calculation corresponding to the chain length (n). In the present embodiment, since the chain length (n) is 360, the processor 36 continues this calculation to create the encrypted data C359 by calculating the XOR between the encrypted data C358 and the unit data D359.

Further, for the first data of the next chain, that is, for the 361st unit data D360 from the frame check code, the processor 36 calculates the XOR with the encryption key K to create the encrypted data C360. Then, the processor 36 calculates the XOR between the encrypted data C360 and the unit data D361 to create the encrypted data C361. After that, the processor 36 performs the calculation corresponding to the chain length (n). More specifically, the processor 36 continues the calculation to create the encrypted data C719. Further, also for the first unit data D720 of the next chain, the processor 36 calculates the XOR with the encryption key K to create the encrypted data C720. After that, the processor 36 performs the same operation. As described above, for the first unit data of each chain, the processor 36 calculates the XOR with the encryption key K to create the encrypted data. For the unit data other than the first unit data of each chain, the processor 36 calculates the XOR between the encrypted data C(m-1) and the unit data D(m) to create the encrypted data C(m). Thus, the processor 36 creates the encrypted data C0, C1, ..., C172798 and C172799 where the frame check code is added to the first data (of the first chain).

The processor 36 performs the encryption processing every time when detecting the frame check code. Incidentally, the frame check code is not encrypted.

Thus, the processor 36 creates chain encrypted data peculiar to each of the frame data, i.e. to each frame.

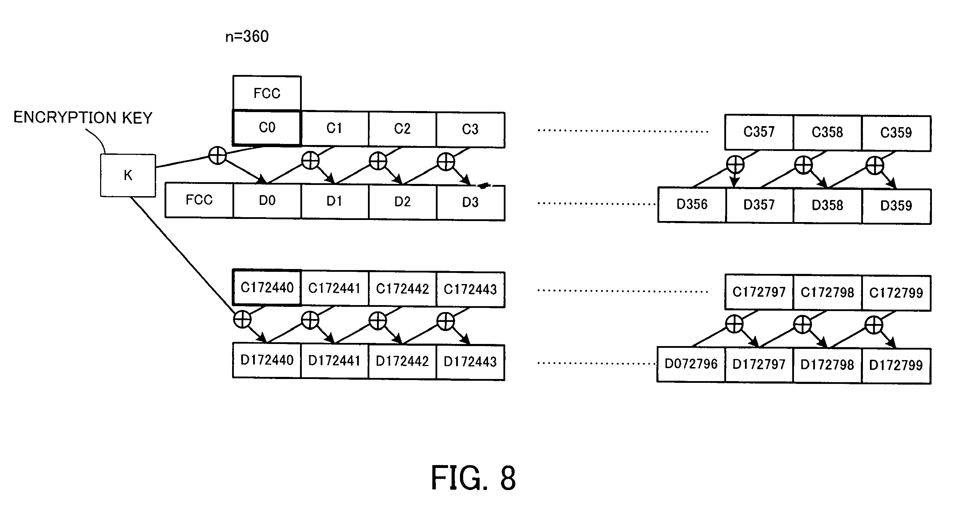

FIG. 8 shows the decryption processing in the computer system.

In the decryption processing, the CPU 41 performs the following steps. That is, the CPU 41 calculates the XOR between the next encrypted data C0 following the frame check code and the encryption key K to decrypt the unit data D0. Subsequently, the CPU 41 calculates the XOR between the next encrypted data C1 and the unit data D0 to decrypt the unit data D1. After that, the CPU 41 sequentially performs this calculation to decrypt the unit data D0 to D359.

Further, for the 361^{st} encrypted data C360 from the frame check code, the CPU 41 calculates the XOR with the encryption key K to decrypt the unit data D360. Then, the CPU 41 calculates the XOR between the unit data D360 and the encrypted data C361 to decrypt the unit data D361. After that, the CPU 41 continues this calculation to decrypt the unit data D719 by calculating the XOR between the unit data D718 and the encrypted data C719. Further, for the encrypted data C720, the CPU 41 calculates the XOR with the encryption key K to create the unit data D720. After that, the CPU 41 performs the same operation as that described above. As described above, for each of the encrypted data corresponding to the chain length (n), the CPU 41 calculates the XOR with the encryption key K to decrypt the unit data. For the encrypted data other than those at the start of a new chain, the CPU 41 calculates the XOR between the unit data D(i-1) and the encrypted data C(i) to decrypt the unit data D(i). Thus, the CPU 41 decrypts the unit data D0, D1, ..., D172798 and D172799.

The CPU 41 performs the above decryption processing every time when detecting the frame check code.

As described above, according to the computer system 100 of the present embodiment, the encrypted data C0, C1, ..., C172798 and C172799 are created. Therefore, the unit data D0, D1, ..., D172798 and D172799, namely, the digital video data can be surely protected from illegal copying.

In addition, a frame check code is generated for each of the frame data (i.e. for each frame) and the encryption is performed on the basis of the frame check code. Therefore, the encryption can be performed in units of frame data. Further, when only the encrypted data and the encryption key are obtained, the encrypted data capable of decryption can be easily created.

Further, since the encryption is performed for each chain of length (n), the decryption is difficult even when the encrypted data flows out. Therefore, the uncompressed VRAW signal and ARAW signal with no deterioration of information due to processing can be easily and surely protected from illegal copying.

Further, even when a part of the encrypted data gets garbled or disappears during transfer, the frame check code is found. Therefore, the data processing on subsequent frame data can be performed continuously.

The signal processing method according to the present embodiment can be applied to any of the VRAW signal, the ARAW signal and the MPEG signal. Particularly, this method is preferably applied to the uncompressed VRAW signal and ARAW signal with no deterioration of information due to copying.

In addition, the unit data of the ARAW signal can be composed of 4-byte data, for example, when assuming that one sampling period corresponds to a 16-bit and 2-Ch coding part. In this case, for example, the chain length (n) is assumed to be 100.

Further, the signal processing method may be appropriately selected as follows. That is, the method according to the present embodiment is used for the VRAW signal and the ARAW signal, and another method such as AES (Advanced Encryption Standard) is used for the MPEG signal.

Next, a second embodiment of the encryption processing and the decryption processing will be described.

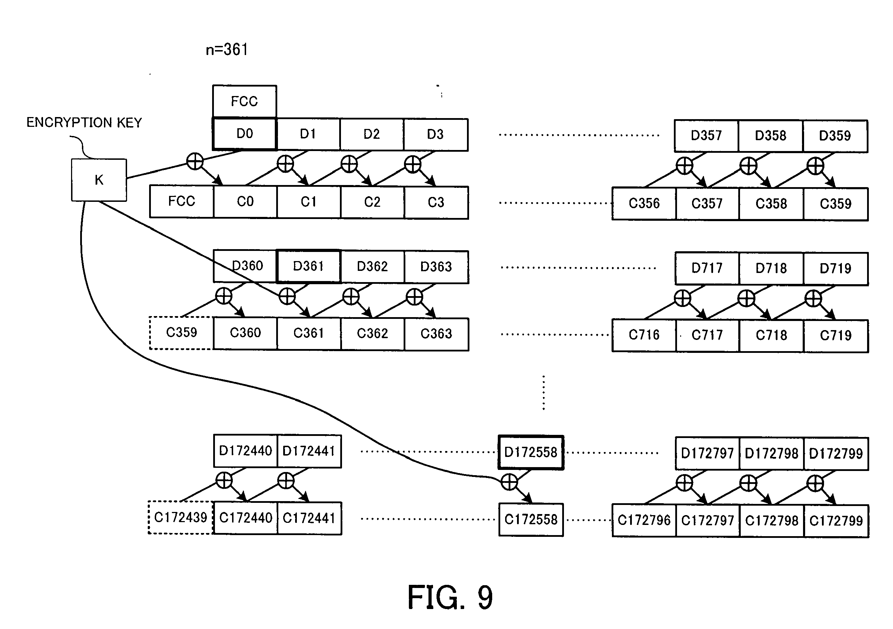

FIG. 9 shows the second embodiment of the encryption processing.

The second embodiment of the encryption processing and the decryption processing will be described below by focusing attention on the difference between the second embodiment and the above-described first embodiment, and an explanation of the same matters as in the first embodiment is omitted.

In the second embodiment, the encryption processing and the decryption processing are the same as those in the first embodiment, except that the data length of the backmost-row chain encrypted data is different from that of the previous chain encrypted data.

In the present embodiment, the chain length (n) is set to 361 as shown in FIG. 9. As a result, the backmost-row chain encrypted data is from C172558 to C172799 and has a data length shorter than that of the previous chain encrypted data. Thus, the chain length is greater than one line.

In the present embodiment, for each of the unit data (which are D0, D361, ..., and D172558 in the present embodiment) at the start of a new chain, the XOR with the encryption key K is calculated to create the encrypted data. For the unit data other than those at the start of a new chain, the XOR between the encrypted data C(i-1) and the unit data D(i) is calculated to create the encrypted data C(i).

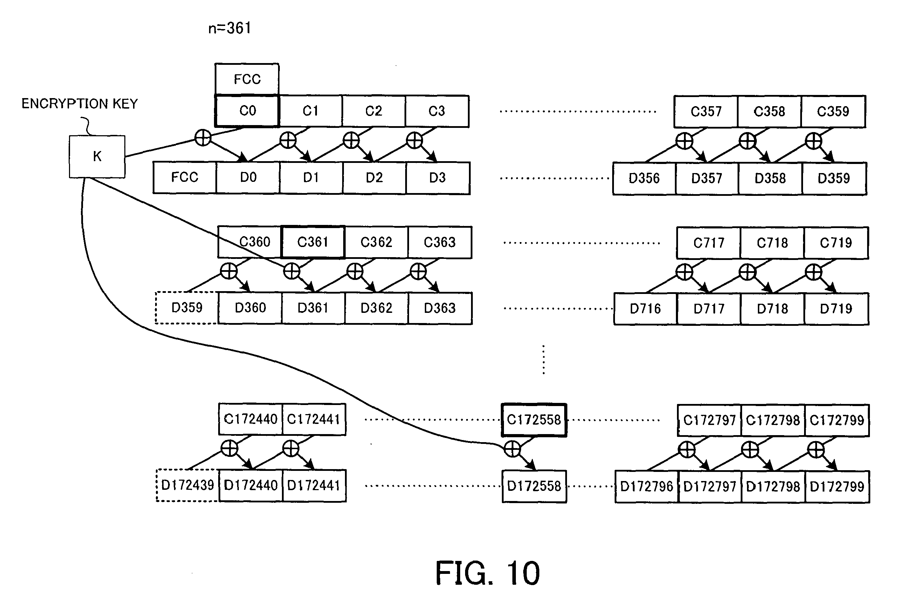

FIG. 10 shows the second embodiment of the decryption processing.

In the present embodiment, for each of the encrypted data (which are C0, C361, ..., and C172558 in the present embodiment) at the start of a new chain, the XOR with the encryption key K is calculated to decrypt the unit data. For the encrypted data other than those at the start of a new chain, the XOR between the unit data D(i-1) and the encrypted data C(i) is calculated to decrypt the unit data D(i) .

According to the second embodiment of the encryption processing and the decryption processing, the same effect as in the information processing method of the first embodiment is obtained.

Further, according to the second embodiment of the encryption processing and the decryption processing, the data length of the backmost-row chain encrypted data is shorter than that of the previous chain encrypted data. Therefore, it becomes more difficult for a third party to find the first data of each of the chain encrypted data, so that transferred data can be surely protected from illegal copying.

Preferred embodiments of the present invention are described in detail above. However, the present invention is not limited to the specific embodiments as described herein.

In the above embodiment, the frame data is constituted by data per frame. However, the present invention is not limited thereto. For example, the frame data may be constituted by data of one frame or more or by data of less than one frame.

In the above embodiments, transfer and reception of the data are performed using the PCI interface 37 and the PCI bus 48. However, the present invention is not limited thereto. For example, the transfer and reception of the data may be performed using USB.

In the above embodiments, 4:2:2 data format is used for the line. However, the present invention is not limited thereto. For example, 4:2:0 (4:0:2) data format may be used or 4:4:4 data format may be used for the line.

In the above embodiments, the unit data is constituted by 4 bytes. However, the present invention is not limited thereto. The unit data is preferably constituted by a bit-width of CPU (by 4 bytes when using a 32-bit CPU).

In the above embodiments, the frame check code is added to the head of the unit data D0. However, the present invention is not limited thereto. For example, the frame check code may be written over the unit data D0.

In the above embodiments, an operation of determining the XOR is performed in the encryption processing and the decryption processing to create and decrypt respective unit data and encrypted data. However, the operation for use in the present invention is not limited to the XOR operation.

In the present invention, the chain encrypted data is created. Therefore, digital video data or digital audio data can be surely protected from illegal copying.

Further, the frame check code is set, so that the encryption is performed for each of the frame data. Therefore, when only the encrypted data and encryption key of the frame are obtained, encrypted data capable of decryption can be easily created.

Further, even when a part of the chain encrypted data gets garbled or disappears during the transfer, the frame check code can be found. Therefore, the data processing on the subsequent frame data can be performed continuously.

The foregoing is considered as illustrative only of the principles of the present invention. Further, since numerous modifications and changes will readily occur to those skilled in the art, it is not desired to limit the invention to the exact construction and applications shown and described, and accordingly, the invention includes all suitable modifications falling within the scope of the appended claims.

## Claims

1. An encryption system for subjecting time series data to sequential encryption processing to create encrypted data and sequentially transferring the encrypted data, the system comprising:
an encryption device; and
a decryption device; wherein:
the encryption device includes:
a code setting unit for separately setting a frame check code on first data of each of a plurality of frame data, each of the plurality of frame data created by collecting unit data into chains;
an encrypting unit for creating chain encrypted data for each of the chains by sequentially performing an encryption processing, on the basis of the frame check code, using encryption results of previous unit data for encryption of next unit data; and
a transferring unit for transferring the chain encrypted data for each of the chains; and wherein:
the decryption device includes:
a receiving unit for receiving the chain encrypted data for each of the chains transferred by the transferring unit;
and
a decrypting unit for creating decrypted data by subjecting the chain encrypted data for each of the chains received by the receiving unit to a sequential decryption processing using decryption results of previous unit data for decryption of next unit data.

2. The encryption system according to claim 1, wherein the frame data is uncompressed data.

3. The encryption system according to claim 1 or 2, wherein the created chain encrypted data is stored in a predetermined storing unit.

4. The encryption system according to any of claims 1 to 3, wherein the frame check code is added to the head of the unit data.

5. The encryption system according to any preceding claim, wherein each frame data represents a respective video frame.

6. The encryption system according to any preceding claim, wherein the unit data includes a luminance signal and a color-difference signal.

7. The encryption system according to any preceding claim, wherein the unit data is data obtained every sampling period.

8. The encryption system according to any preceding claim, wherein:
the frame data is constituted by a plurality of chains in which each of n-th (n is a natural number of 2 or more) unit data from the frame check code is used as starting data; and
the chains within the frame data are encrypted such that the last chain to be encrypted is prevented from extending to the next frame data.

9. The encryption system according to claim 8, wherein a data length of the backmost-row chain encrypted data is different from that of the other chain encrypted data.

10. An encryption device for subjecting time series data to sequential encryption processing to create encrypted data and sequentially transferring the encrypted data, the device comprising:
a code setting unit for separately setting a frame check code on first data of each of a plurality of frame data, each of the plurality of frame data created by collecting unit data into chains; and
an encrypting unit for creating chain encrypted data for each of the chains by sequentially performing an encryption processing, on the basis of the frame check code, using encryption results of previous unit data for encryption of next unit data.

11. The encryption device according to claim 10, further comprising:
a transferring unit for transferring the created chain encrypted data for each of the chains.

12. The encryption device according to claim 10 or 11, wherein:
the frame data is constituted by a plurality of chains in which each of n-th (n is a natural number of 2 or more) unit data from the frame check code is used as starting data; and
the chains within the frame data are encrypted such that the last chain to be encrypted is prevented from extending to the next frame data.

13. A decryption device for sequentially performing decryption of time series data, the device comprising:
a receiving unit for receiving chain encrypted data, the chain encrypted data being created by separately setting a frame check code on first data of each of a plurality of frame data created by collecting unit data into chains and by sequentially performing an encryption processing for each of the chains of each frame data, on the basis of the frame check code, using encryption results of previous unit data for encryption of next unit data; and
a decrypting unit for creating decrypted data by sequentially subjecting the chain encrypted data received by the receiving unit to a decryption processing using decryption results of previous unit data for decryption of next unit data.

14. The decryption device according to claim 13, wherein:
each frame data of the plurality of frame data is constituted by a plurality of chains in which each of n-th (n is a natural number of 2 or more) unit data from the frame check code is used as starting data; and
the chains within the frame data are encrypted such that the last chain does not extend to the next frame data.
